# EUROPEAN PATENT SPECIFICATION

(11) **EP 3 148 264 B1**
(45) Date of publication and mention of the grant of the patent: **14.11.2018**
(21) Application number: 16191074.0
(22) Date of filing: 28.09.2016
(51) Int. Cl.: H04W 52/36, H04W 52/18

(54) **ELECTRONIC DEVICE, CONTROL METHOD, AND CONTROL PROGRAM**
ELEKTRONISCHE VORRICHTUNG, STEUERUNGSVERFAHREN UND STEUERUNGSPROGRAMM
DISPOSITIF ELECTRONIQUE, PROCÉDÉ DE COMMANDE ET PROGRAMME DE COMMANDE

(30) Priority: 28.09.2015 JP 2015190439
(43) Date of publication of application: 29.03.2017
(73) Proprietor: Kyocera Corporation, Kyoto-shi Kyoto 612-8501 (JP)
(72) Inventor: TANABE, Shigeki, Kyoto, 612-8501 (JP); MORITA, Hideki, Kyoto, 612-8501 (JP); MASUIKE, Isao, Kyoto, 612-8501 (JP); SAITO, Shinya, Kyoto, 612-8501 (JP)
(74) Representative: Schwabe - Sandmair - Marx

(56) References cited:
- WO-A1-2016/089714
- JP-A- 2003 209 483
- US-A1- 2012 062 424
- US-A1- 2015 201 387

## Description

### BACKGROUND

### 1. Technical Field

The present application relates to an electronic device, a control method, and a control program.

### 2. Description of the Related Art

A radio-frequency electromagnetic energy control system is known which includes a sensor assembly for detecting when a mobile communication device approaches a body and a controller for controlling radiation of radio-frequency electromagnetic energy from the mobile communication device and in which the controller decreases at least one of average power and duration of the radio-frequency electromagnetic energy radiated from the mobile communication device when the sensor assembly detects that the mobile communication device approaches a body (see Japanese Laid-open Patent Publication No. 2003-209483).

Document US 2015/0201387 A1 discloses a radio frequency attenuation function technique for intelligently modifying the performance of radio devices to maintain a specific absorption rate (SAR) compliance with regulatory requirements while minimally perturbing antennas / radio operations. The attenuation may be based on ambient conditions like temperature or humidity.

The radio-frequency electromagnetic energy control system according to the related art has room for improvement in the technique of detecting that a mobile communication device approaches a body.

### SUMMARY

It is an object of the present invention to at least partially solve the problems in the conventional technology.

This is achieved by the electronic device according to claim 1, the control method of an electronic device according to claim 7 and the non-transitory storage medium according to claim 8.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a perspective view of a tablet according to embodiments;
FIG. 2 is a front view of the tablet;
FIG. 3 is a rear view of the tablet;
FIG. 4 is a block diagram of the tablet;
FIG. 5 is a diagram illustrating an example of a first state in which the tablet is used;
FIG. 6 is a diagram illustrating an example of a second state in which the tablet is used;
FIG. 7 is a diagram illustrating an example of a variation in humidity which is detected by the tablet;
FIG. 8 is a flowchart illustrating a process flow of an example of control for determination of an approach to a body by the tablet; and
FIG. 9 is a flowchart illustrating a process flow of another example of the control for determination of an approach to a body by the tablet.

### DETAILED DESCRIPTION OF THE PREFERRED EMBODIMENTS

Plural embodiments of an electronic device, a control method, and a control program according to the present application will be described below in detail with reference to the accompanying drawings. Hereinafter, a tablet will be described as an example of the electronic device.

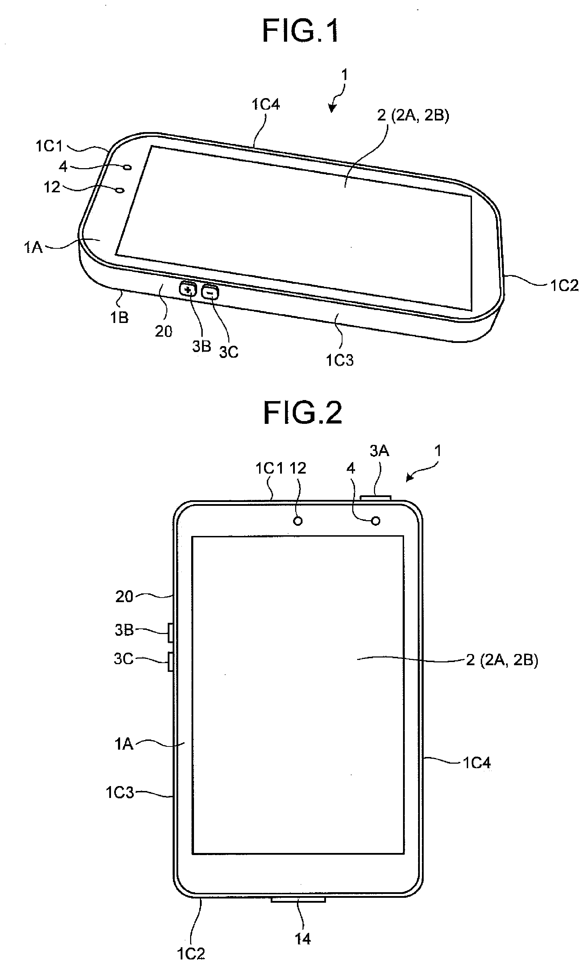

The entire configuration of a tablet 1 according to embodiments will be described below with reference to FIGS. 1 to 3. As illustrated in FIGS. 1 to 3, the tablet 1 includes a housing 20. The housing 20 includes a front face 1A, a back face 1B, and side faces 1C1 to 1C4. The front face 1A is a front surface of the housing 20. The back face 1B is a back surface of the housing 20. The side faces 1C1 to 1C4 are side surfaces connecting the front face 1A and the back face 1B. Hereinafter, the side faces 1C1 to 1C4 may be generically named as side face 1C without specifying the side face.

The tablet 1 includes a touch screen display 2, an illumination sensor 4, and a camera 12 on the front face 1A. The tablet 1 includes a camera 13 on the back face 1B. The tablet 1 includes buttons 3A to 3C and a connector 14 on the side faces 1C. Hereinafter, the buttons 3A to 3C may be generically named as the button 3 without specifying the button.

The touch screen display 2 includes a display 2A and a touch screen 2B. In the example illustrated in FIG. 1, the display 2A and the touch screen 2B have a substantially rectangular shape, but the shapes of the display 2A and the touch screen 2B are not limited to this shape. Each of the display 2A and the touch screen 2B may have any shape such as a square shape or a circular shape. In the example illustrated in FIG. 1, the display 2A and the touch screen 2B are located to overlap each other, but the location of the display 2A and the touch screen 2B is not limited to this location. For example, the display 2A and the touch screen 2B may be located to be arranged in parallel or may be located to be separated from each other. In the example illustrated in FIG. 1, the long side of the display 2A is parallel to the long side of the touch screen 2B and the short side of the display 2A is parallel to the short side of the touch screen 2B, but the method of overlapping the display 2A and the touch screen 2B is not limited thereto. When the display 2A and the touch screen 2B are located to overlap with each other, for example, one or more sides of the display 2A may not be parallel to any side of the touch screen 2B.

The display 2A includes a display device such as a liquid crystal display (LCD), an organic electroluminescence (EL) display (OELD), or an inorganic electroluminescence (EL) display (IELD). The display 2A displays characters, images, symbols, figures, and the like.

The touch screen 2B detects a contact of a finger, a pen, a stylus pen, or the like with the touch screen 2B. The touch screen 2B can detect positions at which plural fingers, pens, stylus pens, or the like come in contact with the touch screen 2B. In the following description, a finger, a pen, a stylus pen, or the like comes in contact with the touch screen 2B may be referred to as a "touch object" or a "contact object."

The detection system of the touch screen 2B may be an arbitrary system such as a capacitance system, a resistive membrane system, a surface acoustic wave system (or an ultrasonic system), an infrared system, an electromagnetic induction system, and a load detection system. In the following description, for the purpose of simplification of explanation, it is assumed that a user touches the touch screen 2B using a finger to operate the tablet 1.

The tablet 1 determines a type of a gesture on the basis of at least one of a touch detected by the touch screen 2B, a position at which the touch is detected, a variation of the position at which the touch is detected, an interval with which touches are detected, and the number of times in which the touch is detected. The gesture is an operation which is performed on the touch screen 2B. Examples of the gesture which is determined by the tablet 1 includes, but is not limited thereto, a touch, a long touch, a release, a swipe, a tap, a double tap, a long tap, a drag, a flick, a pinch-in, a pinch-out, etc.

The tablet 1 operates in accordance with the gesture which is determined via the touch screen 2B. Accordingly, operability in which a user can intuitively and easily use the tablet is realized. The operation of the tablet 1 based on the determined gesture may vary depending on a screen displayed on the display 2A. In the following description, for the purpose of simplification of explanation, "the touch screen 2B detects a touch and the tablet 1 determines the type of the gesture to be X on the basis of the detected touch" may be described as "the tablet detects X" or "the controller detects X."

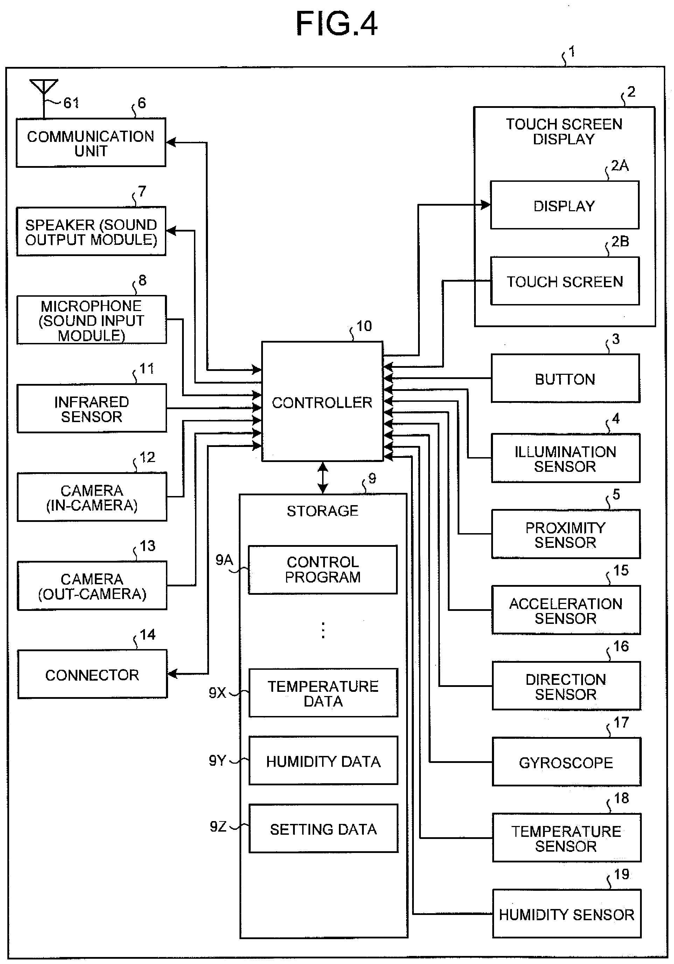

FIG. 4 is a block diagram of the tablet 1. The tablet 1 includes a touch screen display 2, a button 3, an illumination sensor 4, a proximity sensor 5, a communication unit 6, a speaker 7, a microphone 8, a storage 9, a controller 10, an infrared sensor 11, cameras 12 and 13, a connector 14, an acceleration sensor 15, a direction sensor 16, a gyroscope 17, a temperature sensor 18, and a humidity sensor 19.

As described above, the touch screen display 2 includes the display 2A and the touch screen 2B. The display 2A displays characters, images, symbols, figures, and the like. The touch screen 2B detects a touch. The controller 10 detects a gesture on the tablet 1. Specifically, the controller 10 detects an operation (gesture) on the touch screen 2B (the touch screen display 2) in cooperation with the touch screen 2B.

The button 3 is operated by a user. The button 3 includes buttons 3A to 3C. The controller 10 detects an operation on the button 3 in cooperation with the button 3. Examples of the operation on the button 3 include a click, a double click, a triple click, a push, and a multi-push, but are not limited thereto.

The button 3A is, for example, a power-on/off button of the tablet 1. The button 3A may also be used as a sleep/wakeup button. The buttons 3B and 3C are, for example, sound volume buttons.

The illumination sensor 4 detects illuminance of ambient light around the tablet 1. The illuminance is a value of a light flux which is incident on a unit area of a measuring surface of the illumination sensor 4. The illumination sensor 4 is used, for example, for adjustment of luminance of the display 2A. The proximity sensor 5 detects presence of an object close thereto in a contactless manner. The proximity sensor 5 detects presence of an object on the basis of a variation in magnetic field, a variation in return time of reflected waves of ultrasonic waves, or the like. The proximity sensor 5 detects, for example, that the tablet 1 approaches an object. The illumination sensor 4 and the proximity sensor 5 may be constituted by a single sensor. The illumination sensor 4 may be used as a proximity sensor. The infrared sensor 11 detects presence of an object in a contactless manner on the basis of a variation of received infrared light. The infrared sensor 11 is used, for example, for estimation of whether the tablet 1 approaches an object.

The communication unit 6 can communicate in a wireless manner. A communication system which is supported by the communication unit 6 is a wireless communication standard. Examples of the wireless communication standard include communication standards of cellular phones such as 2G, 3G, and 4G. Examples thereof include long term evolution (LTE), wideband code division multiple access (W-CDMA), wideband code division multiple access 2000 (CDMA2000), personal digital cellular (PDC), global system for mobile communications (GSM: registered trademark), and personal handy-phone system (PHS). Examples of the wireless communication standard also include worldwide interoperability for microwave access (WiMAX), IEEE 802.11, Bluetooth (registered trademark), infrared data association (IrDA), and near field communication (NFC). The communication unit 6 may support one or more of the above-mentioned communication standards.

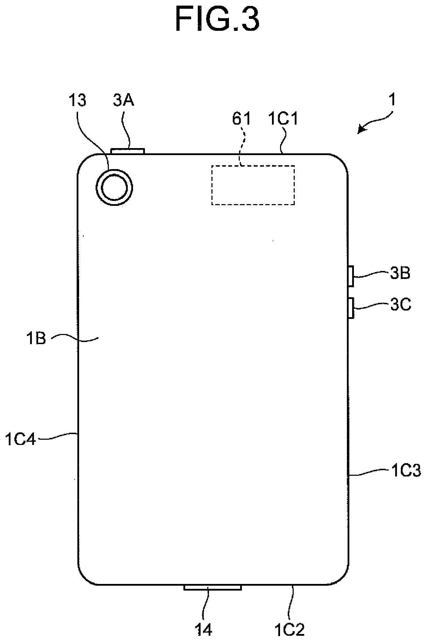

The communication unit 6 includes an antenna module 61. The antenna module 61 can emit radio waves. In the example illustrated in FIG. 3, the antenna module 61 is disposed around the side face 1C1 in the housing 20 of the tablet 1. The communication unit 6 has a function of adjusting an amount of energy of radio waves emitted from the antenna module 61. The communication unit 6 can adjust an amount of energy of radio waves emitted from the antenna module 61 in response to a request from the controller 10. For example, when the communication unit 6 includes an amplifier, an amount of energy of radio waves emitted from the antenna module 61 may be increased or decreased by changing an amplification factor. For example, the communication unit 6 may decrease the amount of energy of radio waves by reducing power of the energy of the radio waves emitted from the antenna module 61 or shortening the time length of the radio waves emitted from the antenna module 61.

The illumination sensor 4, the proximity sensor 5, the infrared sensor 11, the acceleration sensor 15, the direction sensor 16, the gyroscope 17, the temperature sensor 18, and the humidity sensor 19 are disposed in the housing 20 of the tablet 1. In this embodiment, for example, the temperature sensor 18 and the humidity sensor 19 are disposed at positions in the vicinity of the antenna module 61 in the tablet 1. A sensor other than the temperature sensor 18 and the humidity sensor 19 may be disposed in the vicinity of the antenna module 61 in the tablet 1.

The speaker 7 is an example of a sound output module that outputs sound. The speaker 7 can output a sound signal transmitted from the controller 10 as sound. The speaker 7 may be used, for example, to output notification sound, alarm sound, and music. The microphone 8 is an example of a sound input module that inputs sound. The microphone 8 can convert voice of a user or the like into a sound signal and can transmit the sound signal to the controller 10.

The storage 9 can store programs and data. The storage 9 may be used as a work area that temporarily stores process results of the controller 10. The storage 9 includes a recording medium. The recording medium may include a non-transitory storage medium such as a semiconductor storage medium and a magnetic storage medium. The storage 9 may include various types of recording medium. The storage 9 may include combinations of a portable storage medium such as a memory card, an optical disc, or a magneto-optical disk and a reader of a storage medium. The storage 9 may include a storage device which is used as a transitory storage area such as a random access memory (RAM).

The programs stored in the storage 9 include applications which are executed in a foreground or a background and a control program for supporting operations of the applications. For example, the applications display a screen on the display 2A and cause the controller 10 to perform processes corresponding to a gesture detected via the touch screen 2B. The control program is, for example, an operating system (OS). The applications and the control program may be installed in the storage 9 by wireless communication using the communication unit 6 or via a non-transitory storage medium.

The storage 9 stores, for example, a control program 9A, temperature data 9X, humidity data 9Y, and setting data 9Z. The temperature data 9X includes information indicating the temperature around the tablet 1. The humidity data 9Y includes information indicating the humidity around the tablet 1. The setting data 9Z includes information on various settings for the operation of the tablet 1.

The control program 9A may provide a variety of control functions for activating the tablet 1. The control program 9A realizes communication, for example, by controlling the communication unit 6 or the like. The functions provided by the control program 9A include a function of performing a variety of control of changing information displayed on the display 2A depending on the gesture detected via the touch screen 2B. The functions provided by the control program 9A include a function of estimating an approach to an object by controlling the proximity sensor 5. Examples of the object include a human body, an object, and a container containing the tablet. The functions provided by the control program 9A may be used in combination with functions provided by other programs.

The control program 9A may provide a function of determining that the tablet 1 (self-device) approaches a body on the basis of the humidity detected by the humidity sensor 19. Examples of the body include a human body and an animal body. Examples of the approach include an approach to a body and an approach of the tablet 1 to a body. An example of the approach includes a contact of the tablet 1 with a body. The method of determining the approach to a body will be described later. The control program 9A may provide a function of adjusting an amount of energy of radio waves emitted from the antenna module 61.

The temperature data 9X can store temperature information in time series. The temperature information includes items such as a time, a temperature value, and a temperature variation. The time represents a time at which the temperature is detected by the temperature sensor 18. The temperature value represents a value of a temperature detected by the temperature sensor 18. The temperature variation represents a variation of the temperature detected by the temperature sensor 18 per unit time. The temperature data 9X is updated whenever the temperature sensor 18 detects a temperature.

The humidity data 9Y can store humidity information in time series. The humidity information includes items such as a time, a humidity value, and a humidity variation. The time represents a time at which humidity is detected by the humidity sensor 19. The humidity value represents a value of humidity detected by the humidity sensor 19. The humidity variation represents a variation of the humidity detected by the humidity sensor 19 per unit time. The humidity data 9Y is updated whenever the humidity sensor 19 detects humidity.

The setting data 9Z includes determination condition data for determining that the tablet approaches a body. The determination condition data includes a condition for determining whether the detected humidity variation is based on an approach to a body. For example, the determination condition can include conditions such as a threshold value indicating a humidity variation per unit time due to an approach to a body and a humidity variation range. The determination condition can be set on the basis of a result of measurement of humidity using the humidity sensor 19 when a user carries the tablet with a hand.

In this embodiment, data of the determination condition includes the threshold value, but the present invention is not limited to this configuration. For example, the determination condition data may include a humidity variation pattern due to an approach to a body.

The controller 10 is an operation processing unit. Examples of the operation processing unit include a central processing unit (CPU), a system-on-a-chip (SoC), a micro control unit (MCU), a field-programmable gate array (FPGA), and a coprocessor, but the present invention is not limited to this configuration. The controller 10 can integrally control operations of the tablet 1. Various functions of the controller 10 are embodied under the control of the controller 10.

Specifically, the controller 10 can execute commands included in a program stored in the storage 9. The controller 10 can refer to data stored in the storage 9 if necessary. The controller 10 controls functional modules on the basis of the data and the commands. The controller 10 performs various functions by controlling the functional modules. Examples of the functional modules include the display 2A, the communication unit 6, and the speaker 7, but are not limited thereto. The controller 10 may change the control on the basis of detection results of a detection module. Examples of the detection module include the touch screen 2B, the button 3, the illumination sensor 4, the proximity sensor 5, the microphone 8, the infrared sensor 11, the camera 12, the camera 13, the acceleration sensor 15, the direction sensor 16, the gyroscope 17, the temperature sensor 18, and the humidity sensor 19, but are not limited thereto.

The controller 10 may perform a variety of control such as changing information displayed on the display 2A in response to a gesture detected via the touch screen 2B, for example, by executing the control program 9A. The controller 10 may perform a process of estimating whether the self-device approaches an object, for example, by executing the control program 9A. The controller 10 may perform a process of determining whether the self-device approaches a body, for example, by executing the control program 9A.

The camera 12 and the camera 13 can convert a captured image into electrical signals. The camera 12 is an in-camera that captures an image of an object coming in contact with the front face 1A. The camera 13 is an out-camera that captures an image of an object coming in contact with the back face 1B.

The connector 14 is a terminal to which another device is connected. The connector 14 may be a general-purpose terminal such as a universal serial bus (USB), a high-definition multimedia interface (HDMI) (registered trademark), a light peak (Thunderbolt (registered trademark)), or an earphone/microphone connector. The connector 14 may be a dedicated terminal such as a dock connector. Examples of a device connected to the connector 14 include an external storage, a speaker, and a communication device, but are not limited thereto.

The acceleration sensor 15 can detect a direction and a magnitude of acceleration acting on the tablet 1. The direction sensor 16 can detect a geomagnetic direction. The gyroscope 17 can detect an angle and an angular velocity of the tablet 1. The detection results of the acceleration sensor 15, the direction sensor 16, and the gyroscope 17 may be used in combination to detect variations of the position and the attitude of the tablet 1.

The temperature sensor 18 can detect a temperature around the tablet 1. For example, the temperature sensor 18 includes a thermistor. The humidity sensor 19 can detect humidity around the tablet 1. For example, the humidity sensor 19 includes a resistance type humidity sensor or a capacitance type humidity sensor. For example, the detection result of the temperature sensor 18 is used to detect that the tablet 1 approaches an object.

For example, in the tablet 1, the proximity sensor 5, the temperature sensor 18, and the humidity sensor 19 are disposed in the vicinity of the antenna module 61. The tablet 1 can detect a humidity value indicating whether a body approaches the vicinity of the antenna module 61 by disposing the humidity sensor 19 in the vicinity of the antenna module 61.

For example, the tablet 1 can determine whether an object approaching the tablet is a body on the basis of the humidity detection result from the humidity sensor 19. The time required for causing a variation in humidity due to an approach to a body is shorter than the time required for causing a variation in humidity around the tablet due to an influence of weather change, air-conditioning equipment, or the like. Accordingly, the tablet 1 can determine whether an object approaching the tablet is a body using the humidity detection result from the humidity sensor 19.

In this embodiment, the tablet 1 includes the temperature sensor 18 and the humidity sensor 19, but the present invention is not limited to this configuration. For example, the tablet 1 may have the temperature sensor 18 and the humidity sensor 19 incorporated into a unified body. That is, the tablet 1 may include a temperature and humidity sensor.

A part or all of the programs and the data stored in the storage 9 in FIG. 4 may be downloaded from another device by wireless communication using the communication unit 6. A part or all of the programs and the data stored in the storage 9 in FIG. 4 may be stored in a non-transitory storage medium which can be read by a reader included in the storage 9. A part or all of the programs and the data stored in the storage 9 in FIG. 4 may be stored in a non-transitory storage medium which can read by a reader connected to the connector 14. Examples of the non-transitory storage medium include storage mediums such as an optical disk such as a CD (registered trademark), a DVD (registered trademark), or a Blu-ray (registered trademark), a magneto-optical disk, a magnetic storage medium, a memory card, and a solid-state storage medium, but are not limited thereto.

The configuration of the tablet 1 illustrated in FIG. 4 is an example and may be appropriatly modified without departing from the gist of the present invention. For example, the number and the types of the buttons 3 are not limited to the examples illustrated in FIGS. 1 to 3. The tablet 1 may include buttons for operating a screen. In the example illustrated in FIG. 4, the tablet 1 includes two cameras, but the tablet 1 may include only one camera or may not include a camera. In the example illustrated in FIG. 4, the tablet 1 includes plural sensors for detecting the position and the attitude, but the tablet 1 may not include some sensors thereof. Alternatively, the tablet 1 may include another type of sensor for detecting at least one of the position and the attitude.

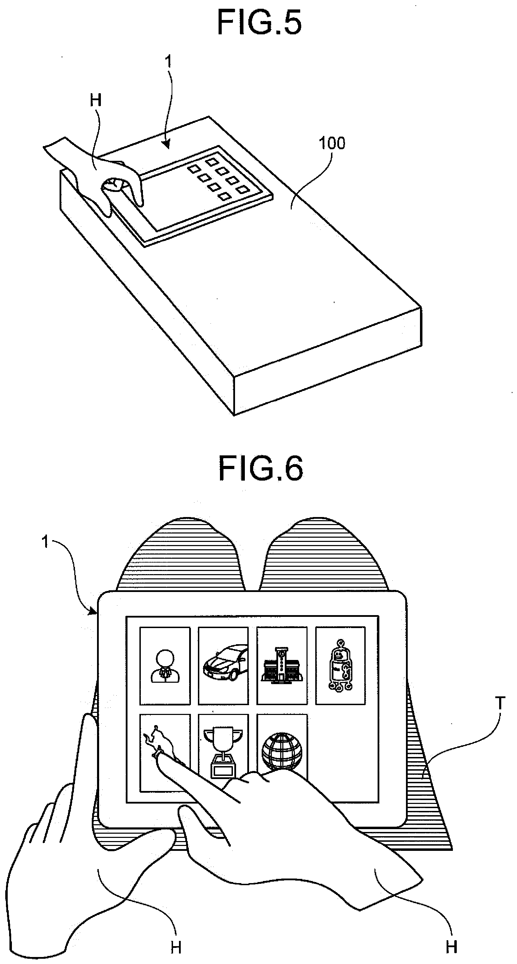

An example of the method of causing the tablet 1 to determine whether the self-device approaches a body will be described below. FIG. 5 is a diagram illustrating an example of a first state in which the tablet 1 is used. FIG. 6 is a diagram illustrating a second state in which the tablet 1 is used.

For example, as illustrated in FIG. 5, the first state includes a state in which a user puts the tablet 1 on a desk 100 or the like and operates the tablet with a hand H. That is, in the first state, there is a high possibility that a user's body will not approach the vicinity of the antenna module 61 of the tablet 1. In the first state, there is a high possibility that the tablet 1 will not decrease an amount of energy of radio waves emitted from the antenna module 61.

For example, as illustrated in FIG. 6, the second state includes a state in which a user puts the tablet 1 on the femoral region T and operates the tablet with a hand H. That is, in the second state, there is a high possibility that the user's body will approach the vicinity of the antenna module 61 of the tablet 1. In the second state, it is preferable that the tablet 1 decrease an amount of energy of radio waves emitted from the antenna module 61. The second state may include, for example, a state in which the user uses the tablet 1 with both hands or a single hand.

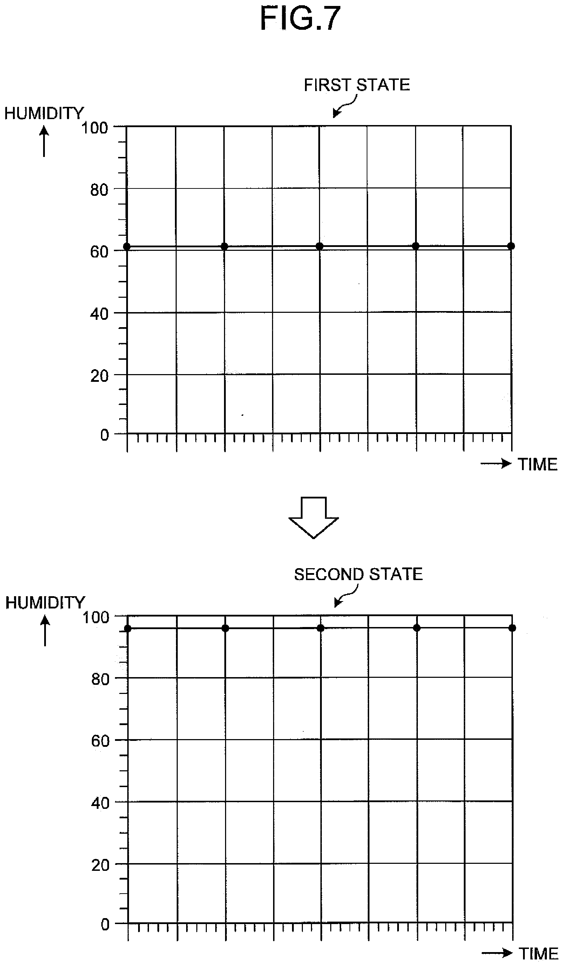

FIG. 7 is a diagram illustrating an example of a variation in humidity detected by the tablet 1. The example illustrated in FIG. 7 represents detection results in a predetermined time which are detected by the tablet 1 at the same timing for each of the first state and the second state.

In the first state and the second state, the humidity detected by the tablet 1 varies. The tablet 1 including the humidity sensor 19 in the vicinity of the antenna module 61 can determine whether a body approaches the vicinity of the antenna module 61 on the basis of the humidity value when it is estimated the tablet approaches an object. The tablet 1 can determine that the tablet approaches a body when a predetermined variation in humidity is detected. In the example of humidity illustrated in FIG. 7, the tablet 1 detects humidity of about 60.9% in the first state. The user changes the use state to the second state by moving the tablet 1 onto the femoral region T from the first state. In this case, the hand H and the femoral region T of the user are located in the vicinity of the antenna module 61 (the humidity sensor 19). When the first state is changed to the second state, the humidity value detected by the tablet 1 varies to increase. In the example of humidity illustrated in FIG. 7, the tablet 1 detects humidity of about 95.0% when the first state is changed to the second state.

In the tablet 1, a determination condition for determining a predetermined variation in humidity is set in advance. Examples of the determination condition include a threshold value of a variation per predetermined time corresponding to the predetermined variation in humidity and a range of the variation. The determination condition for determining the predetermined variation in humidity can be set to exclude a variation in humidity due to weather change, air-conditioning equipment, or the like. An increasing value of humidity per unit time due to an approach to a body tends to be greater than the increasing value of humidity per unit time due to an influence of weather change, air-conditioning equipment, or the like. Therefore, the determination condition for excluding the variation in humidity due to an influence of weather change, air-conditioning equipment, or the like can employ a variation in humidity per unit time. For example, the tablet 1 can set a threshold value of the humidity value increasing per minute to 15%/min and can determine that a body approaches the vicinity of the antenna module 61 when the calculated humidity value increasing per unit time is equal to or greater than 15%/min. The variation in humidity per unit period is not limited to the exemplified determination condition, but can be appropriately modified without departing from the technical scope of excluding the variation in humidity due to an influence of weather change, air-conditioning equipment, or the like.

In this embodiment, the tablet 1 sets a predetermined increase in humidity in a predetermined time as the predetermined variation in humidity, but is not limited to this example. For example, the approach determination condition can be set on the basis of a positional relationship of the antenna module 61 and the humidity sensor 19 in the housing 20. For example, when the humidity around the tablet is high, the tablet 1 may determine whether the tablet approaches a body on the basis of the detected humidity value. Specifically, the tablet 1 may determine that the tablet approaches a body when the detected humidity value from the humidity sensor 19 is greater than a predetermined threshold value.

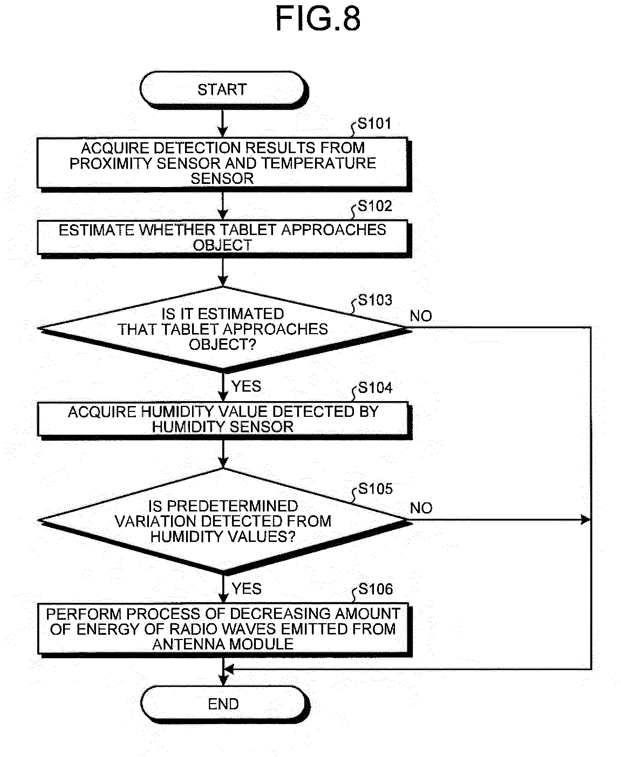

A control process flow associated with the body approach determination by the tablet 1 will be described below with reference to FIG. 8. FIG. 8 is a flowchart illustrating a process flow of an example of control for determination of an approach to a body by the tablet 1. The process flow illustrated in FIG. 8 is embodied by causing the controller 10 to execute the control program 9A. The process flow illustrated in FIG. 8 is repeatedly performed by the controller 10.

As illustrated in FIG. 8, the controller 10 of the tablet 1 acquires detection results of the proximity sensor 5 and the temperature sensor 18 at Step S101. The controller 10 estimates whether the tablet approaches an object on the basis of the acquired detection results at Step S102. For example, when at least one of a predetermined increase in temperature and an approach within a predetermined distance to an object is detected, the controller 10 estimates that the tablet approaches the object. For example, when the predetermined increase in temperature and the approach within the predetermined distance to the object are not detected, the controller 10 estimates that the tablet does not approach the object.

When it is estimated that the tablet approaches an object (Yes at Step S103), the controller 10 moves the process flow to Step S104. At this time, the controller 10 does not specify whether the object is a body. At Step S104, the controller 10 acquires the humidity value detected by the humidity sensor 19. For example, the controller 10 may acquire a newest value and a value before a predetermined time from the humidity data 9Y. For example, the controller 10 may acquire a humidity value in a range from the newest value to the value before a predetermined time from the humidity data 9Y. For example, the controller 10 may acquire the detected humidity value from the humidity sensor 19.

The controller 10 determines whether a predetermined variation is detected from the humidity values in the acquired predetermined time at Step S105. For example, when a difference between the newest humidity value and the humidity value before a predetermined time is greater than a threshold value of the determination condition, the controller 10 may determine that a predetermined variation is detected from the humidity values. For example, when a variation pattern of the humidity value in a predetermined time match a predetermined variation pattern, the controller 10 may determine that a predetermined variation is detected from the humidity values. A case in which both variation patterns match each other includes a case in which a part or all thereof match each other. The controller 10 may calculate a variation in humidity per predetermined time and may determine that a predetermined variation is detected from the humidity values when the calculated variation is greater than the threshold value of the determination condition.

When it is determined that a predetermined variation is detected from the humidity values (Yes at Step S105), the controller 10 moves the process flow to Step S106. At Step S106, the controller 10 performs a process of decreasing an amount of energy of radio waves emitted from the antenna module 61. For example, the controller 10 transmits a request for decreasing the amount of energy of radio waves to the communication unit 6. As a result, the communication unit 6 can decrease the amount of energy of radio waves emitted from the antenna module 61 to be smaller than the amount of energy of radio waves emitted from the antenna module 61 when the controller 10 does not detect a predetermined variation from the humidity values. When the process of decreasing the amount of energy of radio waves ends, the controller 10 ends the process flow illustrated in FIG. 8.

When it is determined that a predetermined variation is not detected from the humidity values (No at Step S105), the controller 10 does not perform the process of decreasing the amount of energy of radio waves but ends the process flow illustrated in FIG. 8.

When it is estimated that the tablet does not approach an object (No at Step S103), the controller 10 does not perform the process of decreasing the amount of energy of radio waves but ends the process flow illustrated in FIG. 8.

When it is estimated that the tablet approaches an object, the tablet 1 can determine whether the tablet approaches a body on the basis of humidity. As a result, the tablet 1 can improve determination accuracy on whether the tablet approaches a body. When it is determined that the tablet approaches a body, the tablet 1 can decrease the amount of energy of radio waves emitted from the antenna module 61. Accordingly, when a body approaches the antenna module 61, the tablet 1 can reduce a specific absorption rate (SAR) of the tablet 1. The specific absorption rate is an amount of energy absorbed per unit time by a tissue with a unit mass by exposing a human body to radio waves.

When a body does not approach the antenna module 61 or the like, the tablet 1 does not adjust the amount of energy of radio waves emitted from the antenna module 61. As a result, the tablet 1 can suppress degradation in convenience when a body does not approach the antenna module 61.

In the process flow illustrated in FIG. 8, the tablet 1 uses the proximity sensor 5 and the temperature sensor 18 for estimating whether the tablet to approach an object, but the present invention is not limited to this configuration. For example, the tablet 1 may use at least one of the proximity sensor 5, the temperature sensor 18, and the infrared sensor 11 to estimate whether the tablet approaches an object. For example, the tablet 1 may use detection results of any of the proximity sensor 5, the temperature sensor 18, and the infrared sensor 11 in combination to estimate whether the tablet approaches an object.

In the process flow illustrated in FIG. 8, when the process of decreasing the amount of energy of radio waves is performed, the tablet 1 may return the amount of energy of radio waves to the original amount of energy at a predetermined timing. Examples of the predetermined timing include a time at which the tablet is determined to be spaced away from a body and a time at which the tablet is determined not to be used. For example, when the detected humidity value decreases to a predetermined value, the tablet 1 can determine that the tablet is spaced away from the body.

Embodiments disclosed in the present application can be modified without departing from the scope of the present invention. Embodiments disclosed in the present application can be appropriately combined. For example, the above-mentioned embodiment may be modified as follows.

For example, the programs illustrated in FIG. 4 may be divided into plural modules or may be combined with another program.

A tablet 1 according to another example of embodiments will be described below. The tablet 1 according to another example of embodiments has the same configuration as the tablet 1 illustrated in FIGS. 1 to 4, except that the function of the control program 9A is different. Therefore, another example of embodiments will be described below using the tablet 1 as an example.

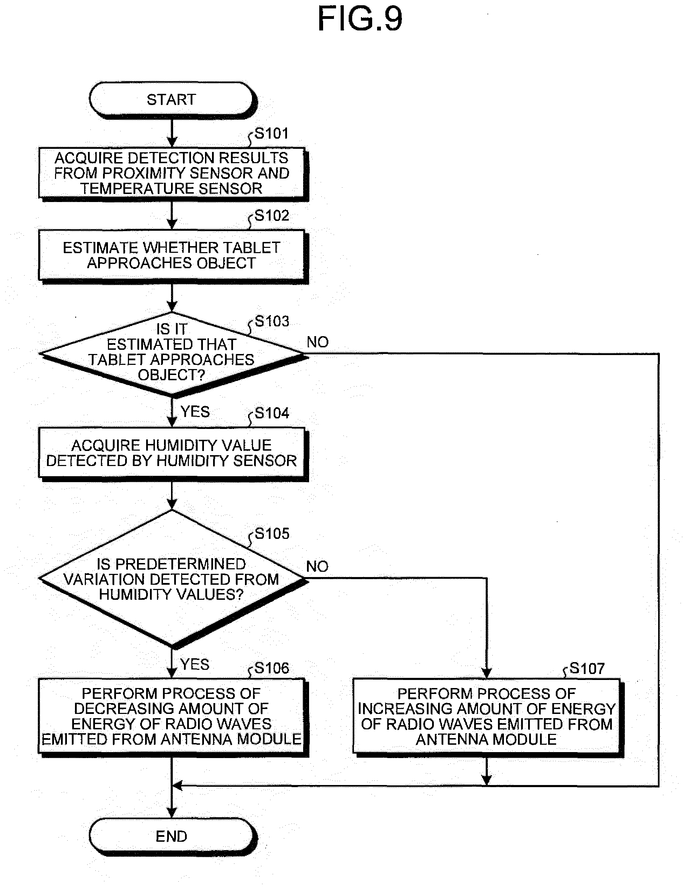

FIG. 9 is a flowchart illustrating a process flow of another example of the control for determination of an approach to a body by the tablet 1. The process flow illustrated in FIG. 9 is embodied by causing the controller 10 to execute the control program 9A. The process flow illustrated in FIG. 9 is repeatedly performed by the controller 10.

In the example illustrated in FIG. 9, since the processes of Steps S101 to S105 are the same as the processes of Steps S101 to S105 illustrated in FIG. 8, only differences therebetween will be described and description of the same parts will not be repeated.

As illustrated in FIG. 9, when it is determined that a predetermined variation is detected from the humidity values (Yes at Step S105), the controller 10 of the tablet 1 performs the process of Step S106. At Step S106, the controller 10 performs the process of decreasing an amount of energy of radio waves emitted from the antenna module 61. For example, the controller 10 transmits a request for decreasing the amount of energy of radio waves to be less than the amount of energy of radio waves when the tablet is in a waiting state or the like to the communication unit 6. As a result, when the tablet approaches a body, the communication unit 6 can decrease the amount of energy of radio waves emitted from the antenna module 61 to be less than the amount of energy of radios when the tablet is in the waiting state or the like. When the process of decreasing the amount of energy of radio waves ends, the controller 10 ends the process flow illustrated in FIG. 9.

When it is determined that a predetermined variation is not detected from the humidity values (No at Step S105), the controller 10 performs the process of Step S107. At Step S107, the controller 10 performs a process of increasing the amount of energy of radio waves emitted from the antenna module 61. For example, the controller 10 transmits a request for increasing the amount of energy of radio waves to be more than the amount of energy of radio waves when the tablet is in the waiting state or the like to the communication unit 6. As a result, when there is a high possibility that the tablet will be used without approaching a body, the communication unit 6 can increase the amount of energy of radio waves emitted from the antenna module 61 to be more than the amount of energy of radio waves when the tablet is in the waiting state or the like. When the process of increasing the amount of energy of radio waves ends, the controller 10 ends the process flow illustrated in FIG. 9.

When it is determined that the tablet approaches a body, the tablet 1 can decrease the amount of energy of radio waves emitted from the antenna module 61 to be less than the amount of energy of radio waves when the tablet is in the waiting state or the like. Accordingly, when a body approaches the antenna module 61, the tablet 1 can reduce the specific absorption rate of the tablet 1.

When it is estimated that the tablet approaches an object and a predetermined variation is not detected from the humidity values, it can be determined that there is a high possibility that the tablet 1 will be used in the first state in which a body does not approach the antenna module. As a result, since the tablet does not approach the body, the tablet 1 can improve communication stability by increasing the amount of energy of radio waves emitted from the antenna module 61 to be more than that when the tablet is in the waiting state or the like.

In the tablet 1 according to the above-mentioned embodiment, the humidity sensor 19 is disposed in the vicinity of the antenna module 61, but the present invention is not limited to this configuration. For example, in the tablet 1, the humidity sensor 19 may be disposed at a position separated from the antenna module 61. In this case, the tablet 1 can determine whether an object approaching the position separated from the antenna module 61 or the like is a body on the basis of the variation of the humidity value detected by the humidity sensor 19.

In the above-mentioned embodiment, the tablet 1 is described as an example of an electronic device, but the electronic device described in the appended claims is not limited to the tablet 1. The electronic device described in the appended claims may be an electronic device other than the tablet 1. Examples of the electronic device include, but are not limited thereto, a mobile phone, a smartphone, a smart watch, a portable PC, a head mount display, a digital camera, a media player, an electronic book reader, a navigator, a game machine, etc.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An electronic device (1) comprising:
an antenna (61) configured to emit radio waves;
a first sensor (19) configured to detect humidity;
a second sensor (4, 5, 15, 16, 17, 18) different from the first sensor; and
a controller (10) configured to adjust an amount of energy of radio waves emitted from the antenna on the basis of a detection result of the first sensor when it is estimated that the electronic device approaches an object on the basis of a detection result of the second sensor;
**characterized in that**
the controller (10) is configured to adjust the amount of energy of the radio waves emitted from the antenna (61) when a predetermined variation in humidity which is detected by the first sensor (19) is detected, and not to adjust the amount of energy of the radio waves when the predetermined variation is not detected.

2. The electronic device (1) according to claim 1, wherein the controller (10) is configured to determine whether the electronic device (1) approaches a body also on the basis of the detection result of the first sensor (19) and adjust the amount of energy of the radio waves emitted from the antenna (61) on the basis of the determination result.

3. The electronic device (1) according to claim 1 or 2, wherein the amount of energy of the radio waves emitted from the antenna (61) when the predetermined variation is detected by the controller (10) is smaller than the amount of energy of the radio waves emitted from the antenna (61) when the predetermined variation is not detected by the controller (10).

4. The electronic device (1) according to any one of claims 1 to 3, wherein the second sensor is configured to include at least one of a temperature sensor (18) and a proximity sensor (5).

5. The electronic device (1) according to any one of claims 1 to 4, wherein the second sensor is configured to include an infrared sensor (11).

6. The electronic device (1) according to any one of claims 1 to 5, wherein the first sensor (19) and the second sensor (4, 5, 15, 16, 17, 18) are configured to be located around the antenna (61).

7. A control method of an electronic device (1) including an antenna (61), a first sensor (19), and a second sensor (4, 5, 15, 16, 17, 18) that is different from the first sensor (19), the control method comprising:
emitting radio waves from the antenna (61);
detecting humidity using the first sensor (19); and
adjusting an amount of energy of the radio waves emitted from the antenna (61) on the basis of a detection result of the first sensor (19) when it is estimated that the electronic device approaches an object on the basis of a detection result of the second sensor (4, 5, 15, 16, 17, 18); **characterized by**
adjusting the amount of energy of the radio waves emitted from the antenna (61) when a predetermined variation in humidity which is detected by the first sensor (19) is detected, and not adjusting the amount of energy of the radio waves when the predetermined variation is not detected.

8. A non-transitory storage medium that stores a control program for causing an electronic device (1) including an antenna (61), a first sensor (19), and a second sensor (4, 5, 15, 16, 17, 18) that is different from the first sensor (19) to execute:
emitting radio waves from the antenna (61);
detecting humidity using the first sensor (19); and
adjusting an amount of energy of the radio waves emitted from the antenna (61) on the basis of a detection result of the first sensor (19) when it is estimated that the electronic device (1) approaches an object on the basis of a detection result of the second sensor (4, 5, 15, 16, 17, 18); **characterized in that** the control program further causes the electronic device (1) to execute:
adjusting the amount of energy of the radio waves emitted from the antenna (61) when a predetermined variation in humidity which is detected by the first sensor (19) is detected, and not adjusting the amount of energy of the radio waves when the predetermined variation is not detected.

## Patentansprüche

1. Elektronische Vorrichtung (1), umfassend:
eine Antenne (61), die konfiguriert ist, um Funkwellen auszustrahlen;
einen ersten Sensor (19), der konfiguriert ist, um Feuchtigkeit zu erfassen;
einen zweiten Sensor (4, 5, 15, 16, 17, 18), der sich von dem ersten Sensor unterscheidet; und
eine Steuerung (10), die konfiguriert ist, um eine Energiemenge von Funkwellen anzupassen, die von der Antenne auf der Basis eines Erfassungsergebnisses des ersten Sensors ausgestrahlt werden, wenn auf der Basis eines Erfassungsergebnisses des zweiten Sensors geschätzt wird, dass die elektronische Vorrichtung sich einem Objekt nähert; **dadurch gekennzeichnet, dass**
die Steuerung (10) konfiguriert ist, um die Energiemenge der Funkwellen anzupassen, die von der Antenne (61) ausgestrahlt werden, wenn eine festgelegte Schwankung der Feuchtigkeit, die von dem ersten Sensor (19) erfasst wird, erfasst wird, und die Energiemenge der Funkwellen nicht anzupassen, wenn die festgelegte Schwankung nicht erfasst wird.

2. Elektronische Vorrichtung (1) nach Anspruch 1, wobei die Steuerung (10) konfiguriert ist, um zu bestimmen, ob sich die elektronische Vorrichtung (1) einem Körper nähert, auch auf der Basis des Erfassungsergebnisses des ersten Sensors (19), und die Energiemenge der Funkwellen anzupassen, die von der Antenne (61) auf der Basis des Bestimmungsergebnisses ausgestrahlt werden.

3. Elektronische Vorrichtung (1) nach Anspruch 1 oder 2, wobei die Energiemenge der Funkwellen, die von der Antenne (61) ausgestrahlt werden, wenn die festgelegte Schwankung von der Steuerung (10) erfasst wird, kleiner ist als die Energiemenge der Funkwellen, die von der Antenne (61) ausgestrahlt werden, wenn die festgelegte Schwankung nicht von der Steuerung (10) erfasst wird.

4. Elektronische Vorrichtung (1) nach einem der Ansprüche 1 bis 3, wobei der zweite Sensor konfiguriert ist, um mindestens einen von einem Temperatursensor (18) und einem Näherungssensor (5) zu umfassen.

5. Elektronische Vorrichtung (1) nach einem der Ansprüche 1 bis 4, wobei der zweite Sensor konfiguriert ist, um mindestens einen Infrarotsensor (11) zu umfassen.

6. Elektronische Vorrichtung (1) nach einem der Ansprüche 1 bis 5, wobei der erste Sensor (19) und der zweite Sensor (4, 5, 15, 16, 17, 18) konfiguriert sind, um sich um die Antenne (61) zu befinden.

7. Steuerungsverfahren einer elektronischen Vorrichtung (1), einschließlich einer Antenne (61), eines ersten Sensors (19) und eines zweiten Sensors (4, 5, 15, 16, 17, 18), der sich von dem ersten Sensor (19) unterscheidet, das Steuerungsverfahren umfassend:
Ausstrahlen von Funkwellen von der Antenne (61);
Erfassen von Feuchtigkeit unter Verwendung des ersten Sensors (19); und
Anpassen einer Energiemenge der Funkwellen, die von der Antenne (61) auf der Basis eines Erfassungsergebnisses des ersten Sensors (19) ausgestrahlt werden, wenn auf der Basis eines Erfassungsergebnisses des zweiten Sensors (4, 5, 15, 16, 17, 18) geschätzt wird, dass die elektronische Vorrichtung sich einem Objekt nähert; **gekennzeichnet durch**
Anpassen der Energiemenge der Funkwellen, die von der Antenne (61) ausgestrahlt werden, wenn eine festgelegte Schwankung der Feuchtigkeit, die von dem ersten Sensor (19) erfasst wird, erfasst wird, und Nichtanpassen der Energiemenge der Funkwellen, wenn die festgelegte Schwankung nicht erfasst wird.

8. Nichtflüchtiges Speichermedium, das ein Steuerungsprogramm speichert, das eine elektronische Vorrichtung (1) einschließlich einer Antenne (61), eines ersten Sensors (19) und eines zweiten Sensors (4, 5, 15, 16, 17, 18), der sich von dem ersten Sensor (19) unterscheidet, veranlasst, Folgendes auszuführen:
Ausstrahlen von Funkwellen von der Antenne (61);
Erfassen von Feuchtigkeit unter Verwendung des ersten Sensors (19); und
Anpassen einer Energiemenge der Funkwellen, die von der Antenne (61) auf der Basis eines Erfassungsergebnisses des ersten Sensors (19) ausgestrahlt werden, wenn auf der Basis eines Erfassungsergebnisses des zweiten Sensors (4, 5, 15, 16, 17, 18) geschätzt wird, dass die elektronische Vorrichtung (1) sich einem Objekt nähert; **dadurch gekennzeichnet, dass** das Steuerungsprogramm ferner die elektronische Vorrichtung (1) veranlasst, Folgendes auszuführen:
Anpassen der Energiemenge der Funkwellen, die von der Antenne (61) ausgestrahlt werden, wenn eine festgelegte Schwankung der Feuchtigkeit, die von dem ersten Sensor (19) erfasst wird, erfasst wird, und Nichtanpassen der Energiemenge der Funkwellen, wenn die festgelegte Schwankung nicht erfasst wird.

## Revendications

1. Dispositif électronique (1) comprenant :
une antenne (61) conçue pour émettre des ondes radio ;
un premier capteur (19) conçu pour détecter l'humidité ;
un deuxième capteur (4, 5, 15, 16, 17, 18) différent du premier capteur ; et
un dispositif de commande (10) conçu pour ajuster une quantité d'énergie d'ondes radio émises depuis l'antenne en fonction d'un résultat de détection du premier capteur lorsqu'on estime que le dispositif électronique se rapproche d'un objet en fonction d'un résultat de détection du deuxième capteur ;
**caractérisé en ce que**
le dispositif de commande (10) est conçu pour ajuster la quantité d'énergie des ondes radio émises depuis l'antenne (61) lorsqu'une variation prédéterminée de l'humidité qui est détectée par le premier capteur (19) est détectée, et pas pour ajuster la quantité d'énergie des ondes radio lorsque la variation prédéterminée n'est pas détectée.

2. Dispositif électronique (1) selon la revendication 1, dans lequel le dispositif de commande (10) est conçu pour déterminer si le dispositif électronique (1) se rapproche d'un corps également en fonction du résultat de détection du premier capteur (19) et ajuster la quantité d'énergie des ondes radio émises depuis l'antenne (61) en fonction du résultat de détermination.

3. Dispositif électronique (1) selon la revendication 1 ou 2, dans lequel la quantité d'énergie des ondes radio émises depuis l'antenne (61) lorsque la variation prédéterminée est détectée par le dispositif de commande (10) est inférieure à la quantité d'énergie des ondes radio émises depuis l'antenne (61) lorsque la variation prédéterminée n'est pas détectée par le dispositif de commande (10).

4. Dispositif électronique (1) selon l'une quelconque des revendications 1 à 3, dans lequel le deuxième capteur est conçu pour comprendre un capteur de température (18) et/ou un capteur de proximité (5).

5. Dispositif électronique (1) selon l'une quelconque des revendications 1 à 4, dans lequel le deuxième capteur est conçu pour comprendre un capteur infrarouge (11).

6. Dispositif électronique (1) selon l'une quelconque des revendications 1 à 5, dans lequel le premier capteur (19) et le deuxième capteur (4, 5, 15, 16, 17, 18) sont conçus pour être situés autour de l'antenne (61).

7. Procédé de commande d'un dispositif électronique (1) comprenant une antenne (61), un premier capteur (19) et un deuxième capteur (4, 5, 15, 16, 17, 18) qui est différent du premier capteur (19), le procédé de commande comprenant :
l'émission d'ondes radio depuis l'antenne (61) ;
la détection de l'humidité au moyen du premier capteur (19) ; et
l'ajustement d'une quantité d'énergie des ondes radio émises depuis l'antenne (61) en fonction d'un résultat de détection du premier capteur (19) lorsqu'on estime que le dispositif électronique se rapproche d'un objet en fonction d'un résultat de détection du deuxième capteur (4, 5, 15, 16, 17, 18) ; **caractérisé par**
l'ajustement de la quantité d'énergie des ondes radio émises depuis l'antenne (61) lorsqu'une variation prédéterminée de l'humidité qui est détectée par le premier capteur (19) est détectée, et pas l'ajustement de la quantité d'énergie des ondes radio lorsque la variation prédéterminée n'est pas détectée.

8. Support de stockage non transitoire qui stocke un programme de commande destiné à amener un dispositif électronique (1) comprenant une antenne (61), un premier capteur (19) et un deuxième capteur (4, 5, 15, 16, 17, 18) qui est différent du premier capteur (19) à exécuter :
l'émission d'ondes radio depuis l'antenne (61) ;
la détection de l'humidité au moyen du premier capteur (19) ; et
l'ajustement d'une quantité d'énergie des ondes radio émises depuis l'antenne (61) en fonction d'un résultat de détection du premier capteur (19) lorsqu'on estime que le dispositif électronique (1) se rapproche d'un objet en fonction d'un résultat de détection du deuxième capteur (4, 5, 15, 16, 17, 18) ; **caractérisé en ce que** le programme de commande amène en outre le dispositif électronique (1) à exécuter :
l'ajustement de la quantité d'énergie des ondes radio émises depuis l'antenne (61) lorsqu'une variation prédéterminée de l'humidité qui est détectée par le premier capteur (19) est détectée, et pas l'ajustement de la quantité d'énergie des ondes radio lorsque la variation prédéterminée n'est pas détectée.
